# EUROPÄISCHE PATENTANMELDUNG

(11) **EP 1 689 180 A1**
(43) Veröffentlichungstag der Anmeldung: **09.08.2006**
(21) Anmeldenummer: 05002453.8
(22) Anmeldetag: 05.02.2005
(51) Int. Cl.: H04N 7/088, H04N 5/445, H04N 7/087

(54) **Vorrichtung und Verfahren für den Zugriff auf Teletextseiten**

(71) Anmelder: H.P.R. Electronics GmbH Entwicklungs- und Vertriebsgesellschaft, 1220 Wien (AT)
(72) Erfinder: Lösch, Werner, 3100 St. Pölten (AT); Pfeifer, Hans, 2650 Payerbach (AT); Trzil, Berhard, 2000 Oberzögersdorf (AT); Weiss, Günther, 2492 Eggendorf (AT)
(74) Vertreter: Pröll, Jürgen

(57) **Zusammenfassung**

Die vorliegende Erfindung betrifft eine Vorrichtung und ein Verfahren für den Zugriff auf Teletextseiten.

Bei der Erfindung wird dabei von einer Vorrichtung bzw. einem Verfahren für den Zugriff auf Teletextseiten, mit einem Tuner, einem Teletextdecoder, und einer Steuereinheit mit einem Speicher, für die Speicherung von Teletextseiten, ausgegangen, bei denen die Steuereinheit den Speicher für die Speicherung von Teletextseiten derart aufteilt, daß der Speicher Teletextseiten mehrerer unterschiedlicher Programme oder Sendeanstalten speichert, wobei die Teletextseiten dem jeweiligen Programm zugeordnet werden.

## Beschreibung

Die vorliegende Erfindung betrifft eine Vorrichtung und ein Verfahren für den Zugriff auf Teletextseiten.

Unter der Bezeichnung Teletext oder Videotext werden von Sendeanstalten ausgestrahlten Fernsehsignalen neben reinen Bild- und zugehörigen Toninformationen weitere codierte Informationen hinzugefügt, die nach einer Decodierung beispielsweise als Text oder Graphik dargestellt werden können. Um eine bestimmte Teletextseite darstellen zu können, wird die entsprechende Teletextseite durch Eingabe einer Seitennummer oder durch Auswahl aus einer vorgegebenen Gliederung nach Inhalten wie Sport, Nachrichten, Fernsehprogramm usw. z. B. mittels einer Bedieneinrichtung wie einer Fernbedienung eingegeben und ausgewählt.

Da die einzelnen Teletextseiten seriell von der jeweiligen Sendeanstalt ausgestrahlt werden, kann es längere Zeit dauern, bis die ausgewählte Teletextseite aus dem ausgestrahlten Fernsehsignal gewonnen werden kann, um dargestellt werden zu können.

In diesem Zusammenhang sind Teletextdecoder bekannt geworden, die sämtliche Teletextseiten des gerade empfangenen Programms, d. h. der gerade empfangenen Sendeanstalt, speichern. Dadurch wird nach einer gewissen Zeit in der das Programm empfangen wird gewährleistet, daß sämtliche Teletextseiten dieses Programms bzw. dieser Sendeanstalt ohne Wartezeit dargestellt werden können, wenn diese ausgewählt werden.

Die bekannte Vorrichtung für den Zugriff auf Teletextseiten weist aber den Nachteil auf, daß es nach einem Programmwechsel, d. h. nach einem Wechsel zu einer anderen Sendeanstalt, erneut zu Wartezeiten kommt, da die zuvor gespeicherten Teletextseiten der zuvor empfangenen Sendeanstalt gelöscht werden, um die Teletextseiten der Sendeanstalt speichern zu können, die nach dem Wechsel empfangen wird.

Es ist daher Aufgabe der vorliegenden Erfindung, eine Vorrichtung und ein Verfahren für den Zugriff auf Teletextsignalen anzugeben, die es, praktisch ohne Wartezeiten, ermöglichen, beliebige Teletextseiten beliebiger Sendeanstalten darzustellen.

Bei der vorliegenden Erfindung wird diese Aufgabe durch die Merkmale der Ansprüche 1 und 8 gelöst.

Bei der Erfindung wird dabei von einer Vorrichtung bzw. einem Verfahren für den Zugriff auf Teletextseiten, mit einem Tuner, einem Teletextdecoder, und einer Steuereinheit mit einem Speicher für die Speicherung von Teletextseiten, ausgegangen, bei denen die Steuereinheit den Speicher für die Speicherung von Teletextseiten derart aufteilt, daß der Speicher Teletextseiten mehrerer unterschiedlicher Programme oder Sendeanstalten speichert, wobei die Teletextseiten dem jeweiligen Programm zugeordnet werden.

Der Vorteil der Erfindung ist darin zu sehen, daß es durch die Speicherung der Teletextseiten von zuvor empfangenen Programmen möglich ist, die Teletextseiten der zuvor empfangenen Programme sofort, d. h. ohne Wartezeit wieder anzuzeigen, wenn ein zuvor empfangenes Programm erneut ausgewählt wird.

Bei einer vorteilhaften Ausgestaltung ist es vorgesehen, daß für alle Programme, d. h. auch für gerade nicht empfangene Programme, ständig eine Aktualisierung und Speicherung der Teletextseiten vorgenommen wird. Dadurch wird erreicht, daß die Teletextseiten für alle Programme ständig zur Verfügung stehen.

Weitere Vorteile der vorliegenden Erfindung ergeben sich aus den abhängigen Ansprüchen sowie der nachfolgenden Beschreibung von Ausführungsbeispielen erfindungsgemäßer Vorrichtungen anhand von Figuren.

Es zeigt:
- Figur 1: ein Prinzipschaltbild eines ersten Ausführungsbeispiels eines eine Vorrichtung für den Zugriff auf Teletextseiten aufweisenden Fernsehgeräts,
- Figur 2: eine beispielhafte Aufteilung eines Speichers zur Speicherung von Teletextseiten, und
- Figur 3: ein Prinzipschaltbild eines zweiten Ausführungsbeispiels eines eine Vorrichtung für den Zugriff auf Teletextseiten aufweisenden Fernsehgeräts.

Zur Erleichterung des Verständnisses der vorliegenden Erfindung sind in den Figuren nur die Bestandteile der Ausführungsbeispiele dargestellt, die im Zusammenhang mit der Erfindung von Bedeutung sind.

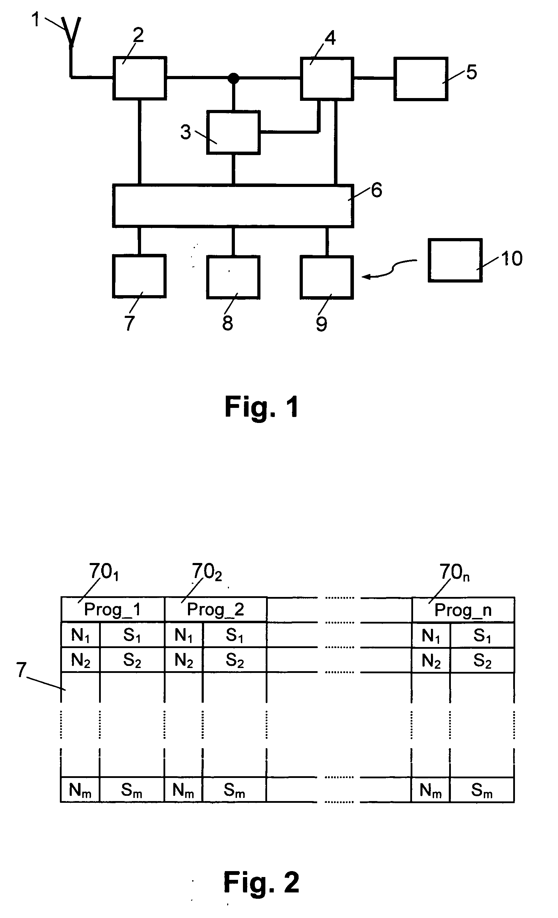

Figur 1 zeigt ein Prinzipschaltbild eines eine Vorrichtung für den Zugriff auf Teletextseiten aufweisenden Fernsehgeräts. Das Fernsehgerät weist einen Signaleingang auf, an dem beispielhaft eine Antenne 1 angeschlossen ist. Statt einer Antenne kann auch eine Satellitenantenne oder ein Kabelanschluß vorgesehen sein. An die Antenne 1 angeschlossenen ist ein Tuner 2 mit Zf-Teil. Am Ausgang des Tuners 2 sind ein Teletextdecoder 3 und eine Signalverarbeitung 4 angeschlossen. Die Signalverarbeitung 4 bereitet das vom Tuner 2 stammende Signal und/oder das vom Teletextdecoder 3 stammende Signal in bekannter Weise für die Wiedergabe auf einem Bildschirm 5 auf. Sämtliche Bestandteile des Fernsehgeräts werden von bzw. über eine Steuereinheit 6, beispielsweise einem Mikroprozessor, gesteuert. Die Steuereinheit 6 weist darüber hinaus einen als Arbeitsspeicher betriebenen Speicher 7 auf, z. B. einen RAM-Speicher, in dem zusätzlich die vom Teletextdecoder 3 decodierten Teletxtseiten gespeichert werden. In einem nichtflüchtigen Speicher 8, z. B. einen EEPROM-Speicher, werden Betriebssoftware und Daten gespeichert. Ebenfalls an die Steuereinheit 6 angeschlossen ist eine Bedieneinrichtung 9, 10 für das Fernsehgerät, die z. B. aus einem Fernbedienungsempfänger 9 und einem Fernbedienungsgeber 10 besteht.

Mittels der Bedieneinrichtung 9, 10 kann ein Benutzer individuelle Teletextseiten auswählen, beispielsweise durch Eingabe einer Seitennummer. Ebenso ist die Auswahl von Teletextseiten aus einer vorgegebenen Gliederung nach Inhalten wie Sport, Nachrichten, Fernsehprogramm usw. möglich. Derartige Auswahlverfahren sind z. B. unter den Bezeichnungen TOP und FLOF bekannt.

Die derart ausgewählte Teletextseite wird auf dem Bildschirm 5 dargestellt, wozu von der Signalverarbeitung 4 ein vom Bildschirm 5 darstellbares Signal erzeugt wird. Dazu werden unter Steuerung der Steuereinheit 6 die Daten der ausgewählten Teletextseite vom Teletextdecoder 3 zur Verfügung gestellt oder alternativ die Daten der ausgewählten Teletextseite aus dem Speicher 7 gelesen, falls die Daten der ausgewählten Textseite im Speicher 7 gespeichert sind.

Die Daten der Teletextseiten werden während des Empfangs eines bestimmten Programms, d. h. einer bestimmten Sendeanstalt, von dem Teletextdecoder 3 decodiert und im Speicher 7 gespeichert. Da sämtliche verfügbaren Teletextseiten seriell in einem bestimmten Zyklus von der Sendeanstalt gesendet werden, weist der Speicher 7 nach Abschluß eines vollständigen Zyklus alle verfügbaren Teletextseiten auf, inklusive eventuell vorhandener Unterseiten. Werden Teletextseiten vom Teletextdecoder 3 decodiert, die bereits im Speicher 7 gespeichert sind, können die aktuellen Teletextseiten die zuvor gespeicherten Teletextseiten ersetzen. Wahlweise kann vor der Ersetzung der Teletextseiten auch überprüft werden, ob sich der Inhalt der jeweiligen Teletextseite geändert hat. Eine Speicherung erfolgt in diesem Fall nur, falls Änderungen des Inhalts Testgestellt wurden.

Wird mittels der Bedieneinrichtung 9, 10 ein anderes Programm, d. h. eine andere Sendeanstalt, ausgewählt, werden die Teletextseiten des zuvor empfangenen Programms, bzw. der zuvor empfangenen Sendeanstalt, im Speicher 7 gehalten und zusätzlich, in der oben beschriebenen Weise, die Teletextseiten des aktuell empfangenen Programms durch den Teletextdecoder 3 decodiert und unter Steuerung der Steuereinheit 6 in den Speicher 7 geschrieben.

In Figur 2 ist eine beispielhafte Aufteilung des Speichers 7 zur Speicherung von Teletextseiten dargestellt. Für jedes empfangene bzw. empfangbare Programm Prog_1 bis Prog_n, d. h. für jede Sendeanstalt, ist ein Speicherbereich 70₁ bis 70ₙ vorgesehen, in dem Teletextseiten gespeichert werden können. Dazu sind für jede Teletextseite Speicherbereiche N₁ bis Nₘ vorgesehen, in welchen die Seitennummern der Teletextseiten gespeichert werden. In weiteren, den Speicherbereichen N₁ bis Nₘ der Seitennummern zugeordneten Speicherbereichen S₁ bis Sₘ werden die Daten der Teletextseiten gespeichert, d. h. die Text- und/oder Graphikinformationen.

Auf diese Weise wird erreicht, daß die Teletextseiten der empfangbaren Programme Prog_1 bis Prog_n nach einem Programmwechsel sofort zur Verfügung stehen. Wurde z. B. zuerst das Programm Prog_1 empfangen und danach das Programm Prog_2 und wird danach erneut Programm Prog_1 ausgewählt, stehen die zuvor gespeicherten Teletextseiten N₁, S₁ bis Nₘ, Sₘ von Prog_1 sofort, d. h. ohne Wartezeit zur Verfügung. Sollte sich der Inhalt der ausgewählten Teletextseite des Programms Prog_1 während des zwischenzeitlichen Empfangs von Programm Prog_2 geändert haben, wird zuerst die im Speicher 7 gespeicherte Teletextseite dargestellt. Sobald die entsprechende aktualisierte Seite vom Teletextdecoder 3 decodiert wird, wird diese aktuelle Teletextseite angezeigt. Gleichzeitig wird die veraltete Teletextseite im nichtflüchtigen Speicher 7 durch die aktualisierte Teletextseite ersetzt.

Die für die Speicherung der Teletextseiten erforderliche Größe des Speichers 7 richtet sich nach der Zahl der empfangbaren Programme bzw. Sendeanstalten sowie die Anzahl der von den Sendeanstalten zur Verfügung gestellten Teletextseiten. Übliche Werte liegen etwa bei 800 bis 1.500 Teletextseiten pro Sendeanstalt.

Abweichend von der in Figur 2 dargestellten festen und gleich großen Anzahl von Teletextseiten N₁, S₁ bis Nₘ, Sₘ pro Speicherbereich 70₁ bis 70ₙ, kann es auch vorgesehen sein, daß sich die Anzahl der pro Speicherbereich 70₁ bis 70ₙ speicherbaren Teletextseiten N₁, S₁ bis Nₘ, Sₘ nach der von der Sendeanstalt zur Verfügung gestellten Anzahl von Teletextseiten richtet. In diesem Fall wird eine entsprechende Aufteilung des Speichers 7 von der Steuereinheit 6 entsprechend der Anzahl der jeweils vorhandenen Teletextseiten vorgenommen. Bei einer Veränderung der Anzahl der Teletextseiten kann selbstverständlich eine dynamische Anpassung der Speicherbereiche 70₁ bis 70ₙ des Speichers 7 durch die Steuereinheit 6 vorgenommen werden.

Sollte das Speichervolumen des Speichers 7 für die Speicherung sämtlicher Teletextseiten N₁, S₁ bis Nₘ, Sₘ aller Programme Prog_1 bis Prog_n nicht ausreichen, sind verschiedene Anpassungen des Speichers 7 durch die Steuereinheit 6 möglich.

Beispielsweise kann nur jeweils die wichtigste Teletextseite, z. B. eine Hauptseite, der zuletzt und/oder aller empfangenen Programme bzw. Sendeanstalten gespeichert werden. Zusätzlich zu den Hauptseiten können auch weitere wichtige Teletextseiten, z. B. Block- und/oder Gruppen- und/oder Magazinanfänge, der zuletzt und/oder aller empfangenen Programme bzw. Sendeanstalten gespeichert werden.

Als vorteilhaft hat es sich herausgestellt, zumindest alle verfügbaren Teletextseiten des augenblicklich empfangenen Programms bzw. der augenblicklich empfangenen Sendeanstalt im Speicher 7 zu speichern.

Sollten darüber hinaus noch Speicherplätze im Speicher 7 zur Verfügung stehen, werden bevorzugt die Teletextseiten der Programme bzw. Sendeanstalten entsprechend ihrer zeitlichen Epfangsreihenfolge so vollständig wie möglich gespeichert, d. h. für Programme bzw. Sendeanstalten, die vor kurzem empfangen wurden, werden mehr Teletextseiten gespeichert als für Programme, deren Empfang bereits länger zurückliegt. Dazu wird von der Steuereinrichtung 6 der jeweils letzte Empfangszeitpunkt ermittelt und im Speicher 7 oder im nichtflüchtigen Speicher 8 für das jeweilige Programm Porg_1 bis Prog_n bzw. die jeweilige Sendeanstalt gespeichert. Der letzte Empfangszeitpunkt kann z. B. aus einer Zeitinformation der Teletextseiten ermittelt werden.

Als weiteres Kriterium für den für die Teletextseiten eines Programms bzw. einer Sendeanstalt durch die Steuereinheit 6 zur Verfügung gestellten Speicherplatz im Speicher 7 kann die Häufigkeit herangezogen werden, mit der dieses Programm bzw. diese Sendeanstalt empfangen wird. Dazu kann die Steuereinheit 6 ermitteln wie oft das Programm insgesamt empfangen wurde oder wie lange es innerhalb eine bestimmten Zeitraums empfangen wurde. Der ermittelte Wert wird von der Steuereinrichtung 6 im Speicher 7 oder im nichtflüchtigen Speicher 8 für das jeweilige Programm Porg_1 bis Prog_n gespeichert. Programme bzw. Sendeanstalten die häufiger bzw. länger empfangen werden, erhalten dabei mehr Speicherplatz im Speicher 7 als die weniger häufig bzw. lange empfangenen.

Besonders vorteilhaft ist die Speicherung der letzten Empfangszeitpunkte und/oder der Empfangshäufigkeit im nichtflüchtigen Speicher 8, damit diese über eine längeren Zeitraum ermittelten Gewohnheiten bei der Auswahl von Teletextseiten nicht verloren gehen, wenn das die Vorrichtung für den Zugriff auf Teletextseiten enthaltende Fernsehgerät ausgeschaltet wird.

Selbstverständlich kann von der Steuereinheit 6 auch eine Kombination der genannten Kriterien, also der zeitlichen Reihenfolge und der Häufigkeit des Empfangs, vorgenommen werden, um den zur Verfügung stehenden Speicherplatz im Speicher 7 aufzuteilen.

Wird das in Figur 1 dargestellte und oben beschriebene Fernsehgerät in einem Stand-by-Modus betrieben, kann laufend eine Aktualisierung der im Speicher 7 gespeicherten Teletextseiten erfolgen. Dabei können die Teletextseiten für alle empfangbaren Programme bzw. Sendeanstalten zyklisch aktualisiert werden, da der Tuner 2 nicht auf ein bestimmtes Programm bzw. eine bestimmte Sendeanstalt eingestellt sein muß. Diese Aktualisierung kann auch für den Fall erfolgen, daß das Fernsehgerät für die Wiedergabe eines Videosignals verwendet wird, wie es z. B. von einem Videorecorder oder einem DVD-Player stammen kann. Dieses Videosignal wird mittels der Signalverarbeitung 4 auf dem Bildschirm 5 dargestellt, weshalb der Tuner 2 nicht auf eine bestimmtes Programm bzw. eine bestimmte Sendeanstalt eingestellt sein muß.

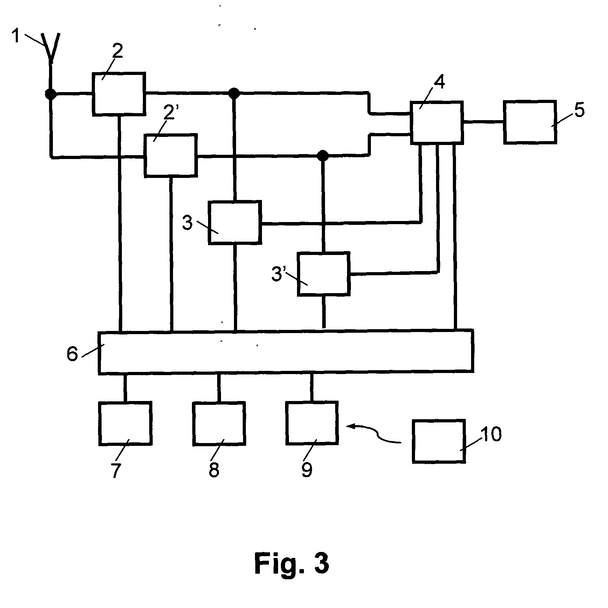

Wird eine Aktualisierung auch während des Empfangs eines bestimmen Programms bzw. einer bestimmten Sendeanstalt gewünscht, wird ein weiterer Tuner benötigt. Figur 3 zeigt dazu ein Prinzipschaltbild eines zweiten Ausführungsbeispiels eines eine Vorrichtung für den Zugriff auf Teletextseiten aufweisenden Fernsehgeräts. Das Fernsehgerät weist einen Aufbau auf, der im wesentlichen dem Aufbau des Fernsehgeräts nach Figur 1 entspricht. Zusätzlich sind jedoch bei dem Fernsehgerät nach Figur 3 ein weiterer Tuner 2' und ein weiterer Teletextdecoder 3' vorhanden. Damit ist es unabhängig von Tuner 2 und Teletextdecoder 3 möglich, die Teletextsignale beliebiger Programme bzw. Sendeanstalten auszuwerten, wenn während des Betriebs des Fernsehgeräts der Tuner 2 auf ein bestimmtes Programm bzw. eine bestimmte Sendeanstalt abgestimmt ist. Auf den Teletextdecoder 3 kann auch verzichtet werden, dann werden die Teletextsingale für alle Programme bzw. Sendeanstalten, auch für das aktuell durch den Tuner 2 empfangene, durch den Teletextdecoder 3' und den zugehörigen Tuner 2' zur Verfügung gestellt.

Sollen die im Speicher 7 gespeicherten Teletextseiten auch nach einem Abschalten des Fernsehgeräts zur Verfügung stehen, muß der Speicher 7 z. B. in einem Stand-by-Betrieb mit Strom versorgt werden. Ebenso kann es vorgesehen sein, daß die Teletextseiten, oder zumindest die wichtigsten der Teletextseiten, im nichtflüchtigen Speicher 8 gespeichert werden.

Statt, wie oben beschrieben, einen separaten Teletextdecoder 3 bzw. 3' vorzusehen, ist es auch möglich, daß die Steuereinheit 6 den oder die Teletextdecoder durch entsprechende Software bildet.

Ebenso ist es möglich, die in den Ausführungsbeispielen dargestellten Schaltungsbestandteile nicht direkt miteinander zu verbinden, sondern mittels eines Datenbusses, z. B. eines I²C-Busses.

Abweichend von der obigen Beschreibung, bei der die Vorrichtung für den Zugriff auf Teletextseiten in einem Fernsehgerät vorgesehen ist, kann eine entsprechende Vorrichtung für den Zugriff auf Teletextseiten in einem Satellitenempfänger, einer Settopbox, einem Videorecorder, einem DVD-Player/Recorder, einem Harddisk-Recorder oder dergleichen vorgesehen werden.

## Patentansprüche

1. Vorrichtung für den Zugriff auf Teletextseiten, mit
einem Tuner (2),
einem Teletextdecoder (3), und
einer Steuereinheit (6) mit einem Speicher (7, 8), für die Speicherung von Teletextseiten,
**dadurch gekennzeichnet, daß**
die Steuereinheit (6) den Speicher (7) für die Speicherung von Teletextseiten derart aufteilt (70₁ bis 70ₙ), daß der Speicher (7) Teletextseiten mehrerer unterschiedlicher Programme oder Sendeanstalten speichert, wobei die Teletextseiten (N₁, S₁ bis Nₘ, Sₘ) dem jeweiligen Programm (Prog_1 bis Prog_n) zugeordnet sind.

2. Vorrichtung nach Anspruch 1,
**dadurch gekennzeichnet, daß**
die Steuereinheit (6) den Speicher (7) derart aufteilt, daß zumindest sämtliche Teletextseiten eines empfangenen Programms gespeichert werden.

3. Vorrichtung nach Anspruch 1 oder 2,
**dadurch gekennzeichnet, daß**
die Steuereinheit (6) den Speicher (7) derart aufteilt, daß zumindest Hauptseiten der zuletzt empfangenen Programme gespeichert werden und/oder die Steuereinheit (6) den Speicher (7) derart aufteilt, daß Block-und/oder Gruppen- und/oder Magazinanfangsseiten der zuletzt empfangenen Programme gespeichert werden.

4. Vorrichtung nach einem der Ansprüche 1 bis 3,
**dadurch gekennzeichnet, daß**
die Steuereinheit (6) für die Aufteilung des Speichers (7) eine Häufigkeit des Empfangs der die Teletextseiten enthaltenden Programme ermittelt, speichert und berücksichtigt.

5. Vorrichtung nach einem der Ansprüche 1 bis 4,
**dadurch gekennzeichnet, daß**
die Steuereinheit (6) für die Aufteilung des Speichers (7) eine Reihenfolge des Empfangs der die Teletextseiten enthaltenden Programme ermittelt, speichert und berücksichtigt und/oder die Steuereinheit (6) die gespeicherten Teletextseiten aller Programme aktualisiert, falls der Tuner (2) kein fest vorgegebenes Programm empfängt.

6. Vorrichtung nach einem der Ansprüche 1 bis 5,
**dadurch gekennzeichnet, daß**
ein weiterer Tuner (2') vorgesehen ist, für die Aktualisierung der gespeicherten Teletextseiten aller Programme und/oder an den weiteren Tuner (2') ein weiter Teletextdecoder (3') angeschlossen ist.

7. Vorrichtung nach einem der Ansprüche 1 bis 6,
**dadurch gekennzeichnet, daß**
die Vorrichtung Bestandteil eines Fernsehgeräts, eines Satellitenempfängers, einer Settopbox, eines Videorecorders, eines Harddisk-Recorders, eines DVD-Players/Recorders oder dergleichen ist.

8. Verfahren für den Zugriff auf Teletextseiten, bei dem Teletextseiten empfangen, decodiert und gespeichert werden,
**dadurch gekennzeichnet, daß**
für die Speicherung von Teletextseiten unterschiedlicher Programme oder Sendeanstalten Speicherbereiche (70₁ bis 70ₙ) vorgesehen werden, wobei die Teletextseiten (N₁, S₁ bis Nₘ, Sₘ) der unterschiedlichen Programme dem jeweiligen Programm (Prog_1 bis Prog_n) zugeordnet werden.

9. Verfahren nach Anspruch 8,
**dadurch gekennzeichnet, daß**
zumindest sämtliche Teletextseiten eines empfangenen Programms gespeichert werden und/oder zumindest Hauptseiten der zuletzt empfangenen Programme gespeichert werden und/oder Block- und/oder Gruppen- und/oder Magazinanfangsseiten der zuletzt empfangenen Programme gespeichert werden.

10. Verfahren nach einem der Ansprüche 8 oder 9,
**dadurch gekennzeichnet, daß**
eine Häufigkeit des Empfangs der die Teletextseiten enthaltenden Programme ermittelt, gespeichert und bei der Speicherung der Teletextseiten berücksichtigt wird.

11. Verfahren nach einem der Ansprüche 8 bis 10,
**dadurch gekennzeichnet, daß**
eine Reihenfolge des Empfangs der die Teletextseiten enthaltenden Programme ermittelt, gespeichert und bei der Speicherung der Teletextseiten berücksichtigt wird.

12. Verfahren nach einem der Ansprüche 9 bis 11,
**dadurch gekennzeichnet, daß**
die gespeicherten Teletextseiten aller Programme aktualisiert werden.
